# EUROPÄISCHE PATENTSCHRIFT

(11) **EP 2 831 398 B1**
(45) Veröffentlichungstag und Bekanntmachung des Hinweises auf die Patenterteilung: **24.10.2018**
(21) Anmeldenummer: 13712258.6
(22) Anmeldetag: 26.03.2013
(51) Int. Cl.: F02C 9/00, F02C 7/00, F02C 9/28, F02C 9/46, F01D 21/14

(54) **VERFAHREN UND ZUGEHÖRIGE VORRICHTUNG ZUM SICHEREN BETRIEB EINER GASTURBINENANLAGE**
METHOD AND CORRESPONDING DEVICE FOR THE SAFE OPERATION OF A GAS TURBINE ASSEMBLY
PROCÉDÉ ET DISPOSITIF ASSOCIÉ DESTINÉS AU FONCTIONNEMENT FIABLE D'UN ENSEMBLE TURBINE À GAZ

(30) Priorität: 30.03.2012 EP 12162566
(43) Veröffentlichungstag der Anmeldung: 04.02.2015
(73) Patentinhaber: Ansaldo Energia IP UK Limited, London W1G 9DQ (GB)
(72) Erfinder: BELZNER, Andreas, 79713 Bad Säckingen (DE)
(74) Vertreter: Bernotti, Andrea
(86) Internationale Anmeldenummer: PCT/EP2013/056361
(87) Internationale Veröffentlichungsnummer: WO 2013/144120

(56) Entgegenhaltungen:
- US-A1- 2005 109 038
- US-A1- 2005 217 273
- US-A1- 2006 225 403
- US-A1- 2007 005 219

## Beschreibung

### TECHNISCHES GEBIET

Die Offenbarung bezieht sich auf ein Verfahren sowie eine Vorrichtung zum sicheren Betrieb einer Gasturbinenanlage, deren Betrieb sowohl durch wenigstens eine Prozessregelung geregelt wird, die betriebsrelevante Prozesse der Gasturbinenanlage auslöst und/oder beeinflusst, als auch durch eine separate und unabhängig zur Prozessregelung betriebene Schutzeinheit unter Zugrundelegung mindestens eines ersten Grenzwertes für einen sicherheitsrelevanten Betriebsparameter überwacht wird, wobei die Schutzeinheit die Gasturbinenanlage notauschaltet, sobald dieser mindestens eine erste Grenzwert überschritten wird.

### STAND DER TECHNIK

Der Betrieb von Gasturbinenanlagen unterliegt hohen Sicherheitsanforderungen, die in internationalen Normen festgelegt sind, wie beispielsweise die Normenreihe IEC 61508, in der die funktionale Sicherheit sicherheitsbezogener elektronischer Systeme spezifiziert ist sowie die Anwendung funktionaler Sicherheitsmethoden zur Vermeidung systematischer Fehler sowie zur sicheren Beherrschung von Systemausfällen oder Systemstörungen näher erläutert ist. Eine auf der vorstehenden Norm aufbauende Zusatznorm IEC 61511 beschäftigt sich mit der funktionalen Sicherheit von sicherheitstechnischen Systemen für die Prozessindustrie, zu der auch der Betrieb von Gasturbinenanlagen zu rechnen ist.

Ein wesentlicher Aspekt der funktionalen Sicherheit beim Betrieb von sicherheitsrelevanten Prozessindustrieanlagen, im Weiteren wird vornehmlich auf den Betrieb von Gasturbinenanlagen abgehoben, betrifft die strikte Trennung zwischen prozessregelungstechnischen Aspekten, die sich auf einen reibungslosen Betrieb sämtlicher Komponenten der Gasturbinenanlage beziehen, und Schutzüberwachungsaufgaben, die beim Auftreten technischer Störungen innerhalb der Gasturbinenanlage dafür sorgen, dass bei Überschreiten eines für die Gasturbinenanlage sowie insbesondere für deren Umgebung vorherrschenden signifikanten Gefahrenpotenzials die Gasturbinenanlage notausgeschaltet wird. Das diesbezügliche Normenwerk für den sicheren Betrieb prozesstechnischer Anlagen fordert eine vollständige funktionale Unabhängigkeit zwischen der die Schutzfunktion übernehmenden Schutzeinheit und einer die prozessregelungstechnischen Aufgaben übernehmenden Prozessregelung einer Gasturbinenanlage. So darf die Prozessregelung einer Gasturbinenanlage die Schutzeinheit in keinem Fall daran hindern, ihrer Schutzfunktion nachzukommen. Dies gilt insbesondere für Personaleingriffe auf die Prozesssteuerung, die im kommerziellen Betrieb einer Gasturbine keinen Einfluss auf die Funktionalität der Schutzeinheit haben dürfen.

Gilt es beispielsweise die Gasturbinenanlage vor überhöhten Wellendrehzahlen zu schützen, so bedarf es lediglich einer Überwachung der Wellendrehzahl und der Vorgabe eines maximal zulässigen Grenzwertes für die Wellendrehzahl, der bei Überschreiten zu einem Gefährdungspotenzial für die Umgebung der Gasturbinenanlage führt. Die Schutzeinheit sorgt in einem derartigen Fall ohne Zwischenschaltung und Abfrage weiterer Systemkomponenten für eine Notausschaltung der Gasturbinenanlage, um diese und die Umgebung vor Schäden zu schützen.

Dieses normative Unabhängigkeitserfordernis tritt jedoch insbesondere beim Betrieb von Gasturbinenanlagen in Konflikt mit für den Gasturbinenanlagenbau typischen Gegebenheiten. Zum einen sind die in der Schutzeinheit vorzugebenden Schutzkriterien nicht für jede Schutzfunktion allgemein gültig, sondern können von jeder einzelnen Gasturbinenanlage individuell abhängen. Dies bedeutet jedoch, dass zumindest während der Inbetriebnahme von Gasturbinenanlagen ein Zugang zur rechnergestützten Schutzeinheit vorhanden sein muss, um auf diese Weise die Funktionalität der Schutzeinheit individuell, beispielsweise durch entsprechendes Fachpersonal, einzustellen bzw. abzustimmen.

Des Weiteren treten während des Betriebes von Gasturbinenanlagen besondere Betriebszustände auf, in denen beispielsweise Stellventil-Positionen durchaus als korrekt zu beurteilen sind, die jedoch in einer anderen Betriebssituation unverzüglich zu einem erhöhten Gefährdungspotenzial führen würden. Derartige Betriebszustände betreffen vornehmlich so genannte transiente Betriebszustände, in denen die Gasturbinenanlage von einem ersten Betriebszustand in einen zweiten Betriebszustand überführt wird. Transiente Betriebszustände treten beispielsweise beim Anfahren oder bei Laständerungen der Gasturbinenanlage auf, in denen beispielsweise Änderungen in der Brennstoffzuführung vorgenommen werden. Um mit Hilfe einer Schutzeinheit auch derartige Betriebszustände bzw. Betriebszustandsänderungen korrekt abzubilden und ein Gefährdungspotenzial eindeutig zu bestimmen, bedarf es einer Vielzahl sensoriell erfassbarer Statusinformationen aus der Gasturbinenanlage, die zudem eine komplizierte Bewertungslogik erfordern kann. Ein derartiger Ansatz widerspricht jedoch dem Wunsch nach einer möglichst einfachen Bewertungslogik und Überprüfbarkeit durch die Schutzeinheit. Darüber hinaus sollten bereits aus Gründen des Wettbewerbes die zur Realisierung der Schutzfunktionsaufgaben erforderlichen Kosten möglichst gering gehalten werden.

Aus der US 2005/0109038 A1 ist ein Verfahren bekannt, in dem eine Abstelleinheit durch Signale von verschiedenen Detektoren ausgelöst werden kann und diese Abstelleinheit eine Gasturbine über eine Treibstoffkontrolleinheit abstellt, wobei die Treibstoffkontrolleinheit zum Abschalten ein Signal an ein Brennstoffventil schickt.

### DARSTELLUNG DER OFFENBARUNG

Der Offenbarung liegt die Aufgabe zugrunde, ein Verfahren sowie eine Vorrichtung zum sicheren Betrieb einer Gasturbinenanlage, deren Betrieb sowohl durch wenigstens eine Prozessregelung geregelt wird, die betriebsrelevante Prozesse der Gasturbinenanlage zumindest auslöst und/oder beeinflusst, als auch durch eine separate und unabhängig zur Prozessregelung betriebene Schutzeinheit unter Zugrundelegung mindestens eines ersten Grenzwertes für einen sicherheitsrelevanten Betriebsparameter (auch als schutzrelevante Betriebsparameter oder sicherheitsrelevante Betriebsgrösse bezeichnet) überwacht wird, wobei die Gasturbinenanlage notausgeschaltet wird, sobald der mindestens eine erste Grenzwert überschritten wird, derart weiterzubilden, dass die normativ geforderte Schutzfunktion beim Betrieb von Gasturbinenanlagen realisiert werden kann und dies mit möglichst technisch einfachen und kostengünstigen Mitteln. Insbesondere gilt es, dem Erfordernis der vollständigen Unabhängigkeit zwischen Schutzeinheit und Prozessregelung nachzukommen, so dass stets gewährleistet ist, dass die Funktionalität der Schutzeinheit nicht durch die Prozessregelung außer Kraft gesetzt werden kann.

Die Prozessregelung kann beispielsweise durch mindestens einen geschlossenen Regelreis realisiert werden. Mit dem geschlossenen Regelkreis wird mindestens eine Regelgrösse, wie z.B. die Leistung, ein Druck oder eine Temperatur des Gasturbinenprozesses auf einen Zielwert geregelt. Dabei erhält der die Prozessregelung Signale von Sensoren die die Regelgrösse des Systems direkt oder indirekt bestimmen und berechnet die Steuersignale für Aktuatoren, die die Regelgrösse direkt oder indirekt beeinflussen. Dies kann z.B. ein Steuersignal für einen Aktuator für ein Brennstoffregelventil sein um eine Heissgastemperatur oder Abgastemperatur zu beeinflussen oder z.B. ein Steuersignal für einen Aktuator für verstellbare Verdichterleitschaufeln sein, um den Ansaugmassenstrom des Verdichter zu regeln und damit einen Druck oder eine Temperatur zu beeinflussen. Der Zielwert kann von den Betriebsbedingungen der Gasturbine abhängen. Die Schutzeinheit, auch als Schutzrechner bezeichnet, erhält Signale von Sensoren die schutzrelevante Grössen direkt (z.B. eine Abgastemperatur) oder indirekt (z.B. eine Heissgastemperatur, die als Funktion der Abgastemperatur und des Druckverhältnisses über die Turbine angenähert wird) messen oder ermitteln und löst bei einem Überschreiten eines Grenzwertes der schutzrelevanten Grösse eine Schutzfunktion, typischerweise ein Notausschalten oder Schnellentlasten der Gasturbine, aus. Das Notausschalten kann beispielsweise über das Schliessen eines Schnellschlussventils (auch Tripventil genannt), mit dem die Brennstoffzufuhr zur Gasturbine unterbunden wird, erfolgen.

Die Lösung der der Offenbarung zugrunde liegenden Aufgabe ist im Anspruch 1 angegeben. Gegenstand des Anspruches 8 ist eine lösungsgemäße Vorrichtung zum sicheren Betrieb einer Gasturbinenanlage. Den lösungsgemäßen Gedanken weiterbildende Merkmale sind in den Unteransprüchen angegeben sowie der weiteren Beschreibung, insbesondere unter Bezugnahme auf Ausführungsbeispiele zu entnehmen.

Lösungsgemäß zeichnet sich ein Verfahren zum sicheren Betrieb einer Gasturbinenanlage gemäß den Merkmalen des Oberbegriffes des Anspruches 1 dadurch aus, dass im Falle eines transienten Betriebszustandes der Gasturbinenanlage, bei dem die Gasturbinenanlage von einem ersten Betriebszustand in einen zweiten Betriebszustand überführt wird, dieser transiente Zustand mithilfe eines geeignet ausgewähltem Prozesssignals durch die Schutzeinheit erkannt werden kann, und das dadurch durch das der mindestens eine erste Grenzwert des sicherheitsrelevanten Betriebsparameters auf einen zweiten Grenzwert angehoben wird, wobei die Gasturbinenanlage, sobald dieser zweite Grenzwert überschritten wird, durch ein Notausschalten der Gasturbinenanlage geschützt wird, ohne dass dieser Schutz durch ein Ausgabesignal der Prozessregelung beeinflusst oder ausser Kraft gesetzt werden kann.

Beispielsweise wird der zweite Grenzwert des jeweils sicherheitsrelevanten Betriebsparameters für eine Zeitspanne angewandt, in der Stellvorgänge von einzelnen Stellgliedern der Gasturbinenanlage vorgenommen werden.

In an sich bekannter Weise erfolgt die systemrelevante funktionelle Einflussnahme auf sämtliche Komponenten der Gasturbinenanlage durch die Prozessregelung, die für einen reibungslosen Anlagenbetrieb sorgt. Hierzu sind sämtliche gasturbinenspezifische Prozesse, die in den unterschiedlichen Komponenten der Gasturbinenanlage ablaufen, systemspezifisch aufeinander abzustimmen. Dies setzt die genaue Kenntnis über anlagenspezifische Betriebsgrößen voraus, die mit Hilfe einer Vielzahl in der Gasturbinenanlage vorgesehener Sensoren erfasst werden und zur weiteren Aus- und Bewertung der Prozessregelung zugeführt werden.

Im Rahmen der Prozessregelung erfolgt auf der Grundlage einer vorgegebenen Regelungslogik, auf die situativ auch während des Betriebes der Gasturbinenanlage, beispielsweise durch Betriebspersonal, zugegriffen werden kann, die Ansteuerung und Regelung betriebsrelevanter Prozessgrößen, deren Überwachung durch eine in der Prozessregelung abgelegte Betriebssicherheitslogik vorgenommen wird, d.h. der reibungslose Betrieb einer Gasturbinenanlage wird durch die Prozessregelung selbst überwacht. Auf diese Weise ist es möglich, in den Systemkomponenten der Gasturbinenanlage auftretende Hardware-Fehler, beispielsweise bei Ventilstellungen oder bei der Dosierung von Luft- bzw. Brennstoffzufuhrmengen etc., rechtzeitig zu detektieren und entsprechende Gegenmaßnahmen zu ergreifen. Derartige Korrekturen können durch die Prozessregelung zur Behebung kleiner Fehler, die nur mit geringem Risikopotential verbunden sind, behoben werden. Handelt es sich hingegen um fehlerhafte Befehlseingaben durch Bedienpersonal oder um in der Regelungslogik auftretende systematische Fehler, so können derartige, mit einem hohen Risikopotential für die Gasturbinenanlage sowie dessen Umfeld verbundene Gefahrensituationen nicht oder in einem nicht ausreichenden Maße durch die in der Prozessregelung implementierte Sicherheitslogik erfasst werden. Derartige, mit einem hohen Risiko- bzw. Gefahrenpotential verbundene Betriebszustände gilt es durch die separat vorgesehene Schutzeinheit zu detektieren und entsprechend zu entschärfen, beispielsweise im Wege der Notausschaltung der Gasturbinenanlage.

Zur Beurteilung des tatsächlich vorhandenen Gefahrenpotentials der im Betrieb befindlichen Gasturbinenanlage ist es erforderlich, dass der Schutzeinheit wenigstens ein sicherheitsrelevanter Betriebsparameter der Gasturbinenanlage direkt zur Verfügung gestellt wird, d.h. der wenigstens eine unmittelbar an der Gasturbinenanlage sensorisch erfasste sicherheitsrelevante Betriebsparameter wird direkt der Schutzeinheit zugeführt.

In besonders bevorzugter Weise werden als sicherheitsrelevante Betriebsparameter folgende Messgrößen von der Gasturbinenanlage erfasst: Drehzahl der Welle, an der Welle auftretende Vibrationen, Amplituden und/oder Frequenz von Brennkammerpulsationen sowie Prozesstemperaturen innerhalb jeweiliger Komponenten der Gasturbinenanlage, so beispielsweise Verdichterauslasstemperatur, Brennkammertemperatur, Gasturbinenauslasstemperatur, um nur einige zu nennen.

Eine besondere Klasse sicherheitsrelevanter Betriebsparameter sind die Stellungssignale von Ventilen, insbesondere von Brennstoffregelventilen (kontinuierliche Positionsanzeige oder binäre Endschaltersignale). Diese Parameter zeigen das Gefahrenpotential einer Betriebssituation nur mittelbar an, in Kombination miteinander oder mit anderen Betriebsparametern. Das Gefahrenpotential wird über logische Schlussfolgerungen erkannt. So zeigt zum Beispiel das Fehlen der Positionsmeldung "geschlossen" eines Brennstoffabsperrventils bei gleichzeitiger Abwesenheit eines Flammensignales aus der Brennkammer die Gefahrensituation an, dass Brennstoff in die Turbine strömt und sich unverbrannt weiter im Prozesspfad ausbreiten und mit Luft zu einem explosiven Gemisch vermischen kann.

Sollte wenigstens ein von der Schutzeinheit überwachter, sicherheitsrelevanter Betriebsparameter einen diesem zugeordneten und in der Schutzeinheit abgelegten ersten Grenzwert überschreiten, so befindet sich die Gasturbinenanlage in einem Zustand mit einem signifikant hohen Gefährdungspotential für die Gasturbinenanlage selbst sowie deren Umgebung, so dass die Schutzeinheit ein Signal generiert, durch das die Gasturbinenanlage notausgeschaltet wird.

Befindet sich die Gasturbinenanlage jedoch in einem transienten Betriebszustand, der beispielsweise beim Anfahren der Gasturbine oder bei einem Lastwechsel auftritt, so unterliegen auch die sicherheitsrelevanten Betriebsparameter signifikanten Größenänderungen, die fallweise zu Grenzwertüberschreitungen innerhalb der Schutzeinheit führen, wodurch die Gasturbinenanlage zu deren Schutz notausgeschaltet würde. In diesen Fällen indiziert die Grenzwertüberschreitung noch nicht unmittelbar eine Gefahr, da die Überschreitung von vorneherein durch die Betriebslogik zeitlich beschränkt ist und da sich bei korrekter Ausgestaltung des transienten Prozesses in dieser Zeit keine Gefahrensituation entwickeln kann. Die Grenzwertüberschreitung kann also kurzzeitig, gegebenenfalls unter Überprüfung zusätzlicher Randbedingungen, toleriert werden. In diesen Fällen würde ein Sicherheitsabschalten einen kontinuierlichen Betrieb der Gasturbinenanlage verhindern.

Um derartige Notabschaltungen während transienter Betriebszuständen zu vermeiden, sieht das lösungsgemäße Verfahren eine vorübergehende Anhebung des wenigstens einen in der Schutzeinheit abgelegten Grenzwertes ausschließlich für den Betriebsfall vor, in dem sich die Gasturbinenanlage in einem transienten Betriebszustand befindet. Im Falle von binären Stellungssignalen von Prozessventilen, ist die "Anhebung des Grenzwertes" als Aufhebung oder Relaxzierung der logischen Bedingungen für die Auslösung des Abschaltsignals zu verstehen.

Durch die ausschließlich für die Zeitspanne eines transienten Betriebszustandes vorgenommene Anhebung des wenigstens einen Grenzwertes, mit dem der jeweils sensorisch erfasste sicherheitsrelevante Betriebsparameter verglichen wird, wird die Restriktivität, mit der die Schutzeinheit die Gasturbinenanlage sicherheitsüberwacht, vorübergehend herabgesetzt, so dass transiente Betriebszustände einer Gasturbinenanlage unterbrechungsfrei durchfahren werden können. Zur Feststellung, ob ein transienter Betriebszustand vorliegt, wird nicht die Prozessregelung herangezogen, da es nicht möglich sein darf, dass die Auslösung der Schutzaktion durch eigene Ausgabesignale der Prozessregelung oder durch Manipulationen des Bedingungspersonals verhindert wird.
Ein transienter Betriebszustand kann durch die Schutzeinheit auf eine der folgende Weisen erkannt werden:
- durch ein geeignet ausgewähltes Prozesssignal, das einen definierten Wert einnimmt oder einen Grenzwert überschreitet, oder wie weiter oben beschrieben, gegebenenfalls durch Gradientenbildung. Transiente Zustände, die für Wellenschwingungen relevant sind, können zum Beispiel durch die Auswertung des zeitlichen Verlaufes der Wellengeschwindigkeit mit geringer logischer Komplexität erkannt werden.
- dadurch, dass eine "unzulässige" Signalkombination (z.B. von Ventilstellungen) nur innerhalb eines zeitlich begrenzten Toleranzfensters auftaucht und wieder verschwindet (siehe die Erläuterung oben). In diesem Fall erkennt die Schutzeinheit, dass ein transienter Betriebszustand vorliegt und unterlässt die Auslösung der Schutzreaktion für ein vorbestimmtes Zeitfenster. Diese "Erkennung" lässt sich gegebenenfalls noch durch zusätzliche logische Beschränkungen stützen - beispielsweise durch eine Beschränkung der Frequenz, in der solche Toleranzfenster zugelassen werden können.

Ein wesentliches Merkmal der Offenbarung besteht darin, dass in der Prozessregelung eine sekundäre Schutzfunktion implementiert werden kann. Der Prozessregelung stehen ohnehin sämtliche, sensorisch erfassten, regelungsrelevanten Betriebsparameter zur Verfügung, die durch geeignete Analyse das Vorliegen und die Dauer eines transienten Betriebszustandes zweifelsfrei belegen. Diese Erkennung des Betriebszustandes ist ohnehin bereits durch das Abfahren bestimmter Sequenzen in der Software konfiguriert. Der aktuelle Betriebszustand wird durch den aktuellen Schritt in der gerade ablaufenden Betriebssequenz eindeutig festgelegt. Das bedeutet, dass der "zusätzliche Schutz in der Prozessregelung" genauer an den vorgesehenen Betriebsablauf angepasst werden kann, und bei transienten Betriebszuständen durch den Prozessregler rascher auf Abweichungen reagiert werden kann, als durch die eigentliche Schutzeinheit. Das heisst, der Schutz in der Prozessregelung kommt ohne oder mit einer kürzeren Zeitverzögerungen aus. Auch vorübergehende Anhebungen des Grenzwertes können z.B. manuell an die aktuellen Gegebenheiten angepasst werden. Dieser sekundäre Schutz ist unter allen Umständen nur ein zusätzlicher Schutz zu der primären Schutzfunktion der Schutzeinheit und kann diese nicht ausser Kraft setzen.

Das bedeutet, dass die sekundäre Schutzfunktion in der Prozesslogik in ihren Schutzkriterien strenger sein kann, als die primäre Schutzfunktion in der Schutzeinheit. Grenzwerte für die Auslösung von Schutzaktionen können näher an das Betriebsfenster gelegt werden, dass für eine individuelle Maschine benötigt wird. Das heisst, die Differenz zwischen dem Wert einer überwachten Grösse (z.B. Temperatur, Druck, Vibration, Pulsation oder Drehzahl usw.), an dem eine Schutzfunktion in der Prozesslogik ausgelöst wird und den Werten, die im normalen Betrieb der Gasturbine erwartet werden, kann kleiner gewählt werden, als die Differenz zwischen dem Wert der selben überwachten Grösse, an dem eine Schutzfunktion in der Schutzeinheit ausgelöst wird und den Werten, die im normalen Betrieb der Gasturbine erwartet werden. Es ist möglich die Parameter der sekundären Schutzfunktion während der Inbetriebnahme jeder Maschine individuell angepasst durch das Inbetriebnahmepersonal einstellen zu lassen. Toleranzzeiten für das Auftreten potentiell gefährlicher Ventilstellungen können zeitlich und logisch unmittelbar an die betriebliche Sequenz gekoppelt werden, da in der Prozesssteuerung alle Information darüber vorhanden ist, ob sich die Maschine in einer transienten Betriebssequenz befindet und in welchem Schritt sie sich genau zu jedem gegebenen Zeitpunkt befindet.

Es bleibt aber zu beachten, dass die sekundäre Schutzfunktion des Prozessreglers weniger zuverlässig ist. Sie sind mit weniger "Sicherheitsintegrität" ausgestattet, als die primären Schutzfunktionen in der Schutzeinheit, da sie Fehlerpotentialen (siehe oben) der Betriebslogik ausgesetzt ist und insbesondere auch durch Entscheidungen des Betriebspersonales beeinflusst werden kann. Daher ist die unabhängige Schutzeinheit unabdingbar. Diese Schutzeinheit ist autark, d.h. sie kann während des Betriebes nicht von aussen beeinflusst werden. Insbesondere können die Grenzwerte der Schutzeinheit weder von dem Prozessregler noch über Eingabemittel, wie eine Tastatur, einen Touch-Bildschirm oder andere Mensch-Maschine Interface beeinflusst werden. Die schutzrelevanten Grenzwerte können auch nicht durch Eingabe von Kommandosignalen, d.h. beispielsweise der Vorgabe einer Solleistung oder der Auswahl einer bestimmten Betriebsart (Brennstoffauswahl, Frequenzunterstützung, Spitzenleistung oder ähnliches) direkt beeinflusst werden. Die Grenzwerte der Schutzeinheit können typischerweise nur durch den tatsächlichen Betriebszustand der Gasturbine beeinflusst werden, beispielsweise kann in der Schutzeinheit ein für Betrieb mit Öl ein anderer Grenzwert für eine Heissgastemperatur vorgegeben sein als für den Betrieb mit Gas.

Beispielsweise für den Fall der Überwachung von an der Welle der Gasturbinenanlage auftretenden Vibrationen durch die Schutzeinheit vermag der diesbezüglich höher gesetzte zweite Grenzwert Vibrationsstärken zu tolerieren, die unweigerlich zu Maschinenschäden führen würden, sofern die Vibrationsstärke über einen längeren Zeitraum anhalten würde. Da sich die Gasturbine in diesem Fall jedoch in einem transienten Betriebszustand befindet, ist davon auszugehen, dass die erhöhten Wellenvibrationen nur vorübergehend auftreten, so dass die Schutzeinheit in diesem Falle kein Signal zur Notausschaltung generiert. Um zu erkennen, dass die Gasturbine sich in einem transienten Betriebszustand befindet, kann in diesem Fall der Gradient der Drehzahl in der Schutzeinheit gebildet werden. Weiter kann die absolute Drehzahl bei der Festlegung des Grenzwertes berücksichtigt werden. Sollten hingegen auch während eines festgestellten transienten Betriebszustandes Vibrationen an der Welle auftreten, die zur Zerstörung der Gasturbinenanlage und einer damit verbundenen hohen Gefahr für die Umgebung führen können, so wäre der höher gesetzte zweite Grenzwert überschritten und die Gasturbinenanlage zu ihrem Schutz notausgeschaltet.

Des Weiteren können während transienter Betriebszustände Ventilstellungskombinationen auftreten, die bei einem normalen Betriebszustand der Gasturbinenanlage zu einem erhöhten Gefahrenpotential führen würden. Beispielsweise könnten sich auf diese Weise explosive Gas- oder Gasgemische in ungeschützten Gasturbinenbereichen ansammeln, die zur Explosion führen könnten. Aufgrund der jedoch nur kurzfristig andauernden Ventilstellungskombination ist ein damit verbundenes Risikopotenzial vertretbar gering, so dass signifikante Gefährdungen von Maschine oder Umgebung ausgeschlossen werden könne. Um zu vermeiden, dass die Schutzeinheit eine derartige gefährliche Ventilstellungskombination während eines transienten Betriebszustandes als Auslöseereignis für die Notausschaltung der Gasturbinenanlage detektiert, wird der Schutzeinheit eine Zeitverzögerung auferlegt, innerhalb der die Schutzeinheit eine derartige, als gefährlich einzustufende Ventilstellungskombination als tolerabel einstuft. In diesem Zusammenhang wird der erste Grenzwert, der eine Zeitspanne umfasst, für den Fall des transienten Betriebszustandes auf einen zweiten, höheren Grenzwert, d.h. eine größere Zeitspanne angehoben, in der die Schutzeinheit trotz festgestellter gefährlicher Ventilstellung kein Notsignal generiert.

Als Auslösung zur Erkennung eines transienten Betriebszustands kann hier die Änderung einer oder mehrerer Ventilstellungen in der Schutzeinheit genutzt werden.

Das vorstehend skizzierte lösungsgemäße Verfahren ist mit einer Vorrichtung durchführbar, die zum sicheren Betrieb einer Gasturbinenanlage mit wenigstens einer Prozessregelung, die Signale generiert, die in der Gasturbinenanlage betriebsrelevante Prozesse zumindest auslösen und/oder diese beeinflussen, sowie mit einer zur Prozessregelung separaten Schutzeinheit, der wenigstens ein erster Grenzwert für einen sicherheitsrelevanten Betriebsparameter zugrunde gelegt ist und die bei Überschreiten des ersten Grenzwertes die Gasturbine notausschaltet. Die lösungsgemäße Vorrichtung zeichnet sich dadurch aus, dass eine Sensoreinheit vorgesehen ist, die schutzrelevante Betriebsparameter von der Gasturbine erfasst, die der Schutzeinheit zuführbar sind, und dass die Schutzeinheit eine Logik aufweisst, mit der sie bestimmte transiente Betriebszustände, d.h. Übergangszustände von einem ersten Betriebszustand in einen zweiten Betriebszustand, erkennen kann. Die Schutzeinheit verfügt über ein den ersten Grenzwert auf einen zweiten, höheren Grenzwert anhebendes Mittel. Wobei sie, sobald die Logik einen definierten transienten Betriebszustand erkannt hat, von dem ersten Grenzwert auf den zweiten Grenzwert umschaltet. Weiter verfügt die Schutzeinheit über eine Schnittstelle zur Sensoreinheit, über die wenigstens eine sensorisch erfasste Betriebsgröße, die einem sicherheitsrelevanten Betriebsparameter entspricht, direkt, d.h. ohne Zwischenschaltung der Prozessregelung übertragbar ist. Schließlich vermag die Schutzeinheit bei Überschreiten des zweiten Grenzwertes die Gasturbine notauszuschalten.

### KURZE BESCHREIBUNG DER ZEICHNUNG

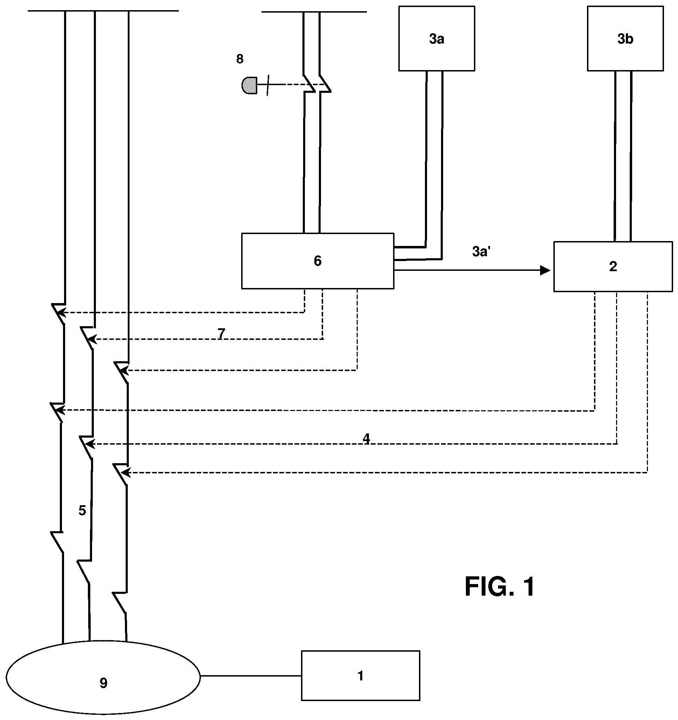

Bevorzugte Ausführungsformen der Offenbarung werden im Folgenden anhand der Zeichnungen beschrieben, die lediglich zur Erläuterung dienen und nicht einschränkend auszulegen sind. In der Zeichnung zeigt die Fig. 1 eine Vorrichtung zum sicheren Betrieb einer Gasturbinenanlage.

### DETAILLIERTE BESCHREIBUNG

In Fig. 1 sind schematisch all jene Komponenten illustriert, die für einen sicheren Betrieb einer Gasturbinenanlage 1 erforderlich sind. Zunächst gilt es, die Gasturbinenanlage 1 mit Hilfe einer rechnerbasierten Prozessregelung 2 betriebskonform zu betreiben. Hierzu werden der Prozessregelung 2 an der Gasturbine 1 sensoriell erfasste betriebsrelevante Prozess- bzw. Betriebsparameter 3b, die nur zur Prozessregelung, sowie alle Betriebsparameter 3a', die sowohl schutzrelevant sind als auch zur Prozessregelung erforderlich sind, zur weiteren Be- und Auswertung zugeführt. Die Prozessregelung 2 generiert Regelsignale, die über Signalleitungen (nicht gezeigt) den einzelnen Komponenten der Gasturbinenanlage 1 zugeführt werden.

Zusätzlich ist separat und unabhängig von der Prozessregelung 2 eine Schutzeinheit 6 vorgesehen, die gleichfalls als selbständig arbeitender Prozessrechner ausgebildet ist. Die Schutzeinheit 6 erhält sensorisch erfasste Betriebsparameter 3a, die sicherheitsrelevante Betriebsparameter darstellen unmittelbar von den jeweiligen, an der Gasturbinenanlage 1 vorgesehenen Sensoren.

Innerhalb der Schutzeinheit 6 erfolgt jeweils ein Vergleich des wenigstens einen sicherheitsrelevanten Betriebsparameter mit einem ersten Grenzwert. Im Falle eines Überschreitens des ersten Grenzwertes sendet die Schutzeinheit 6 ein Signal aus, das über die Leitungen 7 und 5 unverzüglich zu einer Notausschaltung der Gasturbinenanlage 1 führt. Sicherheitsrelevante Betriebsparameter 3a', die ausserdem für die Prozessregelung benötigt werden, werden von der Schutzeinheit 6 an die Prozessregelung 2 übertragen.

Um zu vermeiden, dass die Gasturbinenanlage 1 innerhalb eines transienten Betriebszustandes aufgrund der restriktiv vorgegebenen ersten Grenzwerte durch die Schutzeinheit 6 notabgeschaltet wird, erfolgt ausschließlich während eines derartigen transienten Betriebszustandes eine Anhebung der in der Schutzeinheit 6 abgelegten Grenzwerte auf jeweils höhere Grenzwerte. Auf diese Weise wird die in der Schutzeinheit 6 abgelegte Sicherheitspolitik aufgeweicht. Die Detektion eines transienten Betriebszustandes erfolgt durch die Schutzeinheit 6 auf Basis der ihr zugeführten sicherheitsrelevanten Betriebsparameter 3a, die Schutzeinheit eine eigene Logik zur Erkennung definierter transienter Betriebszustände umfasst. In dem in Fig. 1 dargestellten Ausführungsbeispiel verfügt die Schutzeinheit 6 darüber hinaus über eine Sicherheits-Notabschaltung 8, die gegebenenfalls manuell betätigt werden kann.

Vorzugsweise ist unmittelbar vor der Gasturbinenanlage 1 eine Schalteinheit 9 zwischengeschaltet, die ein Notausschaltsignal erzeugt, sofern zwei der drei Signalleitungen 5 unterbrochen sind.

### BEZUGSZEICHENLISTE

- 1: Gasturbinenanlage
- 2: Prozessregelung
- 3: Betriebsparameter
- 3a: Sicherheitsrelevante Betriebsparameter
- 3a': Sicherheits- und regelungsrelevante Betriebsparameter
- 3b: Regelungsrelevante Betriebsparameter
- 4: Signalleitungen
- 5: Signalleitungen
- 6: Schutzeinheit
- 7: Signalleitungen
- 8: Sicherheitsnotausschaltung
- 9: Schaltmodul

## Patentansprüche

1. Verfahren zum sicheren Betrieb einer Gasturbinenanlage (1), deren Betrieb sowohl durch wenigstens eine Prozessregelung (2), die betriebsrelevante Prozesse der Gasturbinenanlage (1) zumindest auslöst und/oder beeinflusst, geregelt wird, als auch durch eine separate und unabhängig zur Prozessregelung (2) betriebene Schutzeinheit (6) unter Zugrundelegung mindestens eines ersten Grenzwertes für einen sicherheitsrelevanten Betriebsparameter (3a) überwacht wird, wobei die Gasturbinenanlage (1) durch die Schutzeinheit (6) notausgeschaltet wird, sobald der mindestens eine erste Grenzwert überschritten wird,
**dadurch gekennzeichnet, dass** im Falle eines durch die Schutzeinheit (6) erkennbaren transienten Betriebszustandes der Gasturbinenanlage (1), bei dem die Gasturbinenanlage (1) von einem ersten Betriebszustand in einen zweiten Betriebszustand überführt wird, der mindestens eine erste Grenzwert des sicherheitsrelevanten Betriebsparameters auf einen zweiten Grenzwert angehoben wird, wobei die Gasturbinenanlage (1), sobald dieser zweite Grenzwert überschritten wird, durch ein Notausschalten der Gasturbinenanlage (1) geschützt wird.

2. Verfahren nach Anspruch 1,
**dadurch gekennzeichnet, dass** der wenigstens eine sicherheitsrelevante Betriebsparameter (3a), dem jeweils ein erster und zweiter Grenzwert zugeordnet wird, aus den nachfolgenden Betriebsparametern für eine Gasturbinenanlage (1) ausgewählt wird:
- Drehzahl der Welle der Gasturbinenanlage (1),
- Vibrationen der Welle der Gasturbinenanlage (1),
- Amplitude und/oder Frequenz der Brennkammerpulsationen der Gasturbinenanlage (1),
- Temperaturen, denen Komponenten der Gasturbinenanlage (1) ausgesetzt sind,
- Ventilstellungen in Kombinationen miteinander oder mit anderen Betriebsparametern.

3. Verfahren nach Anspruch 1 oder 2,
**dadurch gekennzeichnet, dass** der zweite Grenzwert des jeweils sicherheitsrelevanten Betriebsparameters (3a) für eine vorgegebene Zeitspanne angewandt wird, in der transiente Betriebszustände einer Gasturbinenanlage unterbrechungsfrei durchfahren werden können .

4. Verfahren nach einem der Ansprüche 1 bis 3,
**dadurch gekennzeichnet, dass** der zweite Grenzwert des wenigstens einen sicherheitsrelevanten Betriebsparameters (3a) derart gewählt wird, so dass sichergestellt wird, dass die Gasturbinenanlage (1) durch die Schutzeinheit (6) bei Erreichen eines für die Umgebung der Gasturbinenanlage (1) als gefährlich einzustufenden Gefahrenpotenzials notausgeschaltet wird.

5. Verfahren nach einem der Ansprüche 1 bis 4,
**dadurch gekennzeichnet, dass** die Prozessregelung (2) auf der Grundlage von an der Gasturbinenanlage (1) sensorisch erfassten Betriebsparametern (3, 3a', 3b) den Betriebszustand der Gasturbinenanlage (1) ermittelt und feststellt, ob sich die Gasturbinenanlage (1) in einem transienten Betriebszustand befindet oder nicht, und abhängig von dem ermittelten Betriebszustand aber unabhängig von der Schutzeinheit (6) ein Schutzentlasten oder Notabschalten der Gasturbine (1) bei Überschreiten von Betriebslimiten durchführt.

6. Verfahren nach Anspruch 5,
**dadurch gekennzeichnet, dass** die Differenz zwischen den Betriebslimits der Betriebsparameter (3, 3a', 3b), mit denen in der Prozessregelung (2) ein Schutzentlasten oder Notabschalten der Gasturbine (1) bei Überschreiten von Betriebslimits durchführt und den Werten, die die überwachten Betriebsparameter (3, 3a', 3b) im störungsfreien Betrieb der Gasturbine (1) einnehmen, kleiner ist als die Differenz zwischen den Grenzwerte der Schutzeinheit (6) und den Werten, die die überwachten Betriebsparameter (3, 3a', 3b) im störungsfreien Betrieb der Gasturbine (1) einnehmen.

7. Verfahren nach einem der Ansprüche 1 bis 6,
**dadurch gekennzeichnet, dass** der Prozessregelung (2) über wenigstens ein Mensch- Maschine-Interface Kommandosignale während des Betriebes der Gasturbinenanlage (1) zugeführt werden, durch die Einfluss auf die Prozessregelung (2) genommen wird,
und dass die Schutzeinheit (6) während des Betriebes der Gasturbinenanlage (1) nicht von aussen beeinflussbar ist und ohne jegliche diesbezüglichen Mensch-Maschine-Interface arbeitet.

8. Vorrichtung zum sicheren Betrieb einer Gasturbinenanlage (1) mit wenigstens einer Prozessregelung (2), die Signale generiert, die in der Gasturbinenanlage (1) betriebsrelevante Prozesse zumindest auslösen und/oder diese beeinflussen, sowie mit einer zur Prozessregelung (2) separaten Schutzeinheit (6), die über eine Schnittstelle zu einer Sensoreinheit verfügt, über die wenigstens eine sensorisch erfasste sicherheitsrelevante Betriebsgröße (3a), direkt, d.h. ohne Zwischenschaltung der Prozessregelung (2), übertragbar ist, wobei wenigstens ein erster Grenzwert für einen sicherheitsrelevanten Betriebsparameter (3a) zugrunde gelegt ist und die Schutzeinheit (6) bei Überschreiten des ersten Grenzwertes die Gasturbinenanlage (1) notausschaltet,
**dadurch gekennzeichnet, dass** von der Schutzeinheit (6) eine Signalleitung zur Übertragung von sicherheits- und regelungsrelevanten Betriebsparameter (3a') zur Prozessregelung (2) führt und
dass die Schutzeinheit (6) eine die sicherheitsrelevanten Betriebsparameter (3a) auswertende Logik umfasst, die einen transienten Zustand der Gasturbine (1) erkennen kann und bei Erkennung eines transienten Zustandes den ersten Grenzwert auf einen zweiten, höheren Grenzwert anheben kann und
dass die Schutzeinheit (6) bei Überschreiten des zweiten Grenzwertes die Gasturbinenanlage (1) notausschaltet.

## Claims

1. Method for safely operating a gas turbine plant (1), the operation of which is both controlled by at least one process controller (2) which at least triggers and/or influences operation-relevant processes of the gas turbine plant (1), and monitored by a separate protection unit (6) operated independently of the process controller (2) on the basis of at least one first limit for a safety-relevant operating parameter (3a), wherein the protection unit (6) performs an emergency switch-off of the gas turbine plant (1) as soon as at least one first limit value is exceeded,
**characterised in that**, in the case of a transient operating state of the gas turbine plant (1) which can be detected by the protection unit (6) and in which the gas turbine plant (1) is transferred from a first operating state to a second operating state, the at least one first limit value of the safety-relevant operating parameter is raised to a second limit value, wherein the gas turbine plant (1) is protected by an emergency switch-off of the gas turbine plant (1) as soon as said second limit value is exceeded.

2. Method according to claim 1, **characterised in that** the at least one safety-relevant operating parameter (3a) to which a first and a second limit value are assigned is selected from the following operating parameters for a gas turbine plant (1):
- rotation speed of the shaft of the gas turbine plant (1),
- vibrations of the shaft of the gas turbine plant (1),
- amplitude and/or frequency of the combustion chamber pulses of the gas turbine plant (1),
- temperatures to which components of the gas turbine plant (1) are exposed,
- valve settings in combination with each other or with other operating parameters.

3. Method according to claim 1 or 2, **characterised in that** the second limit value of the respective safety-relevant operating parameter (3a) is applied for a predefined time period in which transient operating states of a gas turbine plant can pass without interruption.

4. Method according to any of claims 1 to 3, **characterised in that** the second limit value of the at least one safety-relevant operating parameter (3a) is selected such that it is ensured that the protection unit (6) performs an emergency switch-off of the gas turbine plant (1) when a risk potential is reached which is to be classified as hazardous to the environment of the gas turbine plant (1).

5. Method according to any of claims 1 to 4, **characterised in that** the process controller (2) determines the operating state of the gas turbine plant (1) on the basis of operating parameters (3, 3a', 3b) detected by sensors at the gas turbine plant (1), and establishes whether or not the gas turbine plant (1) is in a transient operating state, and depending on the operating state determined but independently of the protection unit (6), performs a protective load-relief or emergency switch-off of the gas turbine (1) when operating limits are exceeded.

6. Method according to claim 5, **characterised in that** the difference between the operating limits of the operating parameters (3, 3a', 3b) at which, in the process controller (2), a protective load-relief or emergency switch-off of the gas turbine (1) is performed when operating limits are exceeded, and the values assumed by the monitored operating parameters (3, 3a', 3b) in fault-free operation of the gas turbine (1), is smaller than the difference between the limit values of the protection unit (6) and the values assumed by the monitored operating parameters (3, 3a', 3b) in fault-free operation of the gas turbine (1).

7. Method according to any of claims 1 to 6, **characterised in that** during operation of the gas turbine plant (1), the process controller (2) receives command signals via at least one man-machine interface, via which signals the process controller (2) is influenced, and that the protection unit (6) cannot be influenced externally during operation of the gas turbine plant (1) and works without a man-machine interface in this respect.

8. Device for safely operating a gas turbine plant (1) with at least one process controller (2) which generates signals which at least trigger and/or influence the operation-relevant processes in the gas turbine plant (1), and with a protection unit (6) which is separate from the process controller (2) and which has an interface to a sensor unit, via which interface at least one safety-relevant operating parameter (3a) detected by a sensor can be transmitted directly, i.e. without intervention of the process controller (2), wherein at least one first limit value for a safety-relevant operating parameter (3a) is used as a basis and the protection unit (6) performs an emergency switch-off of the gas turbine plant (1) when the first limit value is exceeded,
**characterised in that** a signal line for transmission of safety-relevant and control-relevant operating parameters (3a') leads from the protection unit (6) to the process controller (2), and
that the protection unit (6) comprises a logic which analyses the safety-relevant operating parameter (3a) and is able to detect a transient state of the gas turbine (1) and, on detection of a transient state, can raise the first limit value to a second higher limit value, and
that the protection unit (6) performs an emergency switch-off of the gas turbine plant (1) when the second limit value is exceeded.

## Revendications

1. Procédé d'exploitation en toute sécurité d'une installation à turbine à gaz (1), dont le fonctionnement est régulé aussi bien par au moins une régulation de processus (2) qui au moins déclenche et/ou influence les processus importants pour le fonctionnement de l'installation à turbine à gaz (1), que par une unité de protection (6) fonctionnant séparément et indépendamment de la régulation de processus (2), sur la base d'au moins une première valeur limite pour un paramètre de fonctionnement (3a) important pour la sécurité, l'installation à turbine à gaz (1) étant arrêtée d'urgence par l'unité de protection (6) dès que l'au moins une valeur limite est dépassée,
**caractérisé en ce que**
dans le cas d'un état de fonctionnement transitoire de l'installation à turbine à gaz (1), détectable par l'unité de protection (6), dans lequel l'installation à turbine à gaz (1) passe d'un premier état de fonctionnement à un deuxième état de fonctionnement, l'au moins une première valeur limite du paramètre de fonctionnement important pour la sécurité est augmentée jusqu'à une deuxième valeur limite, l'installation à turbine à gaz (1) étant protégée par un arrêt d'urgence de l'installation à turbine à gaz (1) dès que cette deuxième valeur limite est dépassée.

2. Procédé selon la revendication 1,
**caractérisé en ce que**
l'au moins un paramètre de fonctionnement important pour la sécurité (3a), auquel correspond une première et une deuxième valeur limite, est sélectionné par les paramètres de fonctionnement suivants pour une installation à turbine à gaz (1) :
- vitesse de rotation de l'installation à turbine à gaz (1),
- vibrations de l'arbre de l'installation à turbine à gaz (1),
- amplitude et/ou fréquence des impulsions de chambre de combustion de l'installation à turbine à gaz (1),
- températures auxquelles sont soumis les composants de l'installation à turbine à gaz (1),
- les positions des vannes en combinaison entre elles ou avec d'autres paramètres de fonctionnement.

3. Procédé selon la revendication 1 ou 2,
**caractérisé en ce que**
la deuxième valeur limite du paramètre de fonctionnement important pour la sécurité (3a) est appliquée pendant une période prédéterminée dans laquelle les états de fonctionnement transitoires d'une installation à turbine à gaz peuvent être parcourus sans interruption.

4. Procédé selon l'une des revendications 1 à 3,
**caractérisé en ce que** la deuxième valeur limite de l'au moins un paramètre de fonctionnement important pour la sécurité (3a) est choisie de façon à ce qu'il soit garanti que l'installation à turbine à gaz (1) soit arrêtée d'urgence par l'unité de protection (6) lorsqu'un risque évalué comme dangereux pour l'environnement de l'installation à turbine à gaz (1) est atteint.

5. Procédé selon l'une des revendications 1 à 4,
**caractérisé en ce que** la régulation de processus (2) détermine, sur la base de paramètres de fonctionnement (3, 3a', 3b) mesurés à l'aide de capteurs sur l'installation à turbine à gaz (1), l'état de fonctionnement de l'installation à turbine à gaz (1) et détermine si l'installation à turbine à gaz (1) se trouve dans un état de fonctionnement transitoire ou non, et, en fonction de l'état de fonctionnement déterminé ou indépendamment de l'unité de protection (6), une décharge de protection ou un arrêt d'urgence de la turbine à gaz (1) est effectué lors d'un dépassement des limites de fonctionnement.

6. Procédé selon la revendication 5,
**caractérisé en ce que** la différence entre les limites de fonctionnement des paramètres de fonctionnement (3a, 3a', 3b) avec lesquels, dans la régulation de processus (2), une décharge de protection ou un arrêt d'urgence de la turbine à gaz (1) est effectué lors d'un dépassement des limites de fonctionnement et les valeurs que prennent les paramètres de fonctionnement surveillés (3, 3a', 3b) lors d'un fonctionnement normal de la turbine à gaz (1), est inférieure à la différence entre les valeurs limites de l'unité de protection (6) et les valeurs que prennent les paramètres de fonctionnement surveillés (3, 3a', 3b) lors d'un fonctionnement normal de la turbine à gaz (1).

7. Procédé selon l'une des revendications 1 à 6,
**caractérisé en ce que**, dans la régulation de processus (2), sont introduites, par l'intermédiaire d'au moins une interface homme-machine, des signaux de commande pendant le fonctionnement de l'installation à turbine à gaz (1), à l'aide desquels la régulation de processus (2) peut être contrôlée,
et **en ce que** l'unité de protection (6) ne peut être influencée de l'extérieur pendant le fonctionnement de l'installation à turbine à gaz (1) et fonctionne sans interface homme-machine.

8. Dispositif d'exploitation en toute sécurité d'une installation à turbine à gaz (1), avec au moins une régulation de processus (2) qui génère des signaux qui au moins déclenchent et/ou influencent les processus importants pour le fonctionnement de l'installation à turbine à gaz (1), ainsi qu'avec une unité de protection (6) séparée de la régulation de processus (2), qui disposé d'une interface avec une unité de capteur, par l'intermédiaire de laquelle l'au moins une grandeur de fonctionnement (3a) importante pour la sécurité et mesurée par un capteur peut être transmise directement, c'est-à-dire sans l'intervention de la régulation de processus (2), au moins une première valeur limite étant déterminée pour un paramètre de fonctionnement important pour la sécurité (3a) et l'unité de protection (6) arrêtant d'urgence l'installation à turbine à gaz (1) lors du dépassement de la première valeur limite,
**caractérisé en ce que**, de l'unité de protection (6), une ligne de signaux pour la transmission de paramètres de fonctionnement importants pour la sécurité et pour la régulation (3a') conduit à la régulation de processus (2) et
l'unité de protection (6) comprend une logique analysant les paramètres de fonctionnement importants pour la sécurité (3a), qui peut détecter un état transitoire de la turbine à gaz (1) et, lors de la détection d'un état transitoire, peut augmenter la première valeur limite jusqu'à une deuxième valeur limite plus élevée et **en ce que** l'unité de protection (6) arrête d'urgence l'installation à turbine à gaz (1) lors du dépassement de la deuxième valeur limite.
